# EUROPEAN PATENT APPLICATION

(11) **EP 2 579 127 A1**
(43) Date of publication of application: **10.04.2013**
(21) Application number: 11183812.4
(22) Date of filing: 04.10.2011
(51) Int. Cl.: G06F 3/01, G01C 17/38, G06F 21/00, H04M 1/60, G06F 1/16

(54) **Orientation determination for a mobile device**

(71) Applicant: Research In Motion Limited, Waterloo, ON N2L 3W8 (CA)
(72) Inventor: Pasquero, Jerome, Waterloo, Ontario N2L 3W8 (CA); Papo, Aleksandar, Waterloo, Ontario N2L 3W8 (CA); Holbein, Marc Edward, Waterloo, Ontario N2L 3W8 (CA)
(74) Representative: Patel, Binesh

(57) **Abstract**

A system for determining an orientation of the head of a user of a mobile device comprises a head-mounted accessory device including a first digital compass for providing a first orientation signal and a short-range wireless transmitter for transmitting the first orientation signal to the mobile device. The mobile device includes a receiver for receiving the first orientation signal. A processor in the mobile device determines the orientation of the user's head based on the first orientation signal. The mobile device may include a second digital compass, thereby providing greater accuracy. By comparing the two orientation signals, the device can infer whether the user is viewing the mobile device. Tilt sensors in the accessory device and mobile device can also be used with the orientation signals to infer whether the user is viewing the mobile device and thus to control content delivered by the mobile device.

## Description

### TECHNICAL FIELD

The present technology relates generally to mobile devices and, in particular, to techniques for determining an orientation of a mobile device.

### BACKGROUND

It is now increasingly common for mobile devices to include digital compasses (magnetometers) from which an orientation of the mobile may be determined. However, there are a number of shortcomings with digital compasses or magnetometers. For example, the device is susceptible to interference from surrounding magnetic objects (e.g. a holster magnet or the hard drive inside the device). Another shortcoming is that the device may be worn in a holster, carried in a purse or placed such that the orientation of the device does not represent the orientation of the user of the device.

A solution to the foregoing technical problem(s) would be highly desirable. Such a solution is disclosed in the present specification and the appended drawings.

### BRIEF DESCRIPTION OF THE DRAWINGS

Further features and advantages of the present technology will become apparent from the following detailed description, taken in combination with the appended drawings, in which:

FIG. 1 is a depiction of a mobile device that may be used to implement the present technology;

FIG. 2 is a depiction of an orientation-determining system that includes a mobile device with a digital compass and a headset or earpiece with its own digital compass;

FIG. 3 is a depiction of another orientation-determining system that includes a mobile device with a digital compass and eyewear with its own digital compass;

FIG. 4A schematically illustrates a situation in which the orientation of a head-mounted accessory device does not match the orientation of a mobile device within a predetermined tolerance;

FIG. 4B schematically illustrates a situation in which the orientation of a head-mounted accessory device matches the orientation of a mobile device within a predetermined tolerance;

FIG. 5A schematically illustrates a situation in which the tilt of a head-mounted accessory device does not match the tilt of a mobile device within a predetermined tolerance;

FIG. 5B schematically illustrates a situation in which the tilt of a head-mounted accessory device matches the tilt of a mobile device within a predetermined tolerance;

FIG. 6 is a flowchart depicting steps of a method for a mobile device to determine an orientation of a user of the mobile device;

FIG. 7 is a flowchart depicting additional steps of a further method of determining the orientations of both the mobile device and the head-mounted accessory from which an inference may be drawn as to whether the user is viewing the mobile device;

FIG. 8 is a depiction of a mobile device displaying a digital compass interface; and

FIG. 9 is a depiction of a mobile device displaying an options and settings page for configuring options and settings for the digital compass.

It will be noted that throughout the appended drawings, like features are identified by like reference numerals.

### DETAILED DESCRIPTION

The present technology generally provides orientation determination techniques for a mobile device or for a system that includes a mobile device and a head-mounted accessory device such as, for example, an earpiece, eyewear, headset or the like. As discussed herein, mobile devices may include a variety of portable electronic devices, such as mobile communication devices (such as cellular phones or smart phones), music players (such as MP3 players), electronic navigation devices (such as Global Positioning System devices), portable DVD players, a personal digital assistants (PDAs), portable computers (such as tablet computers or laptop computers), and some accessories that may be used with smart phones or portable computers, for example. Mobile devices may be handheld, that is, sized and shaped to be held or carried in a human hand. In general, orientation (which includes the direction that an object may be facing or pointing or aligned or aimed or otherwise positioned) may be determined with respect to any reference, such as the center of the Earth, or a magnetic pole of the Earth. Orientation with respect to one reference may be convertible to orientation with respect to another reference; e.g., orientation with respect to the center of the Earth may be convertible to orientation with respect to a floor. As discussed herein, orientation is not determined with respect to any particular reference.

One aspect of the present technology is a method for a mobile device to determine an orientation of a user of the mobile device. The method entails receiving, over a short-range wireless connection between the mobile device and a head-mounted device, a first orientation signal from a first digital compass in the head-mounted accessory device, and determining the orientation of the user based on the first orientation signal.

In one implementation, the method further includes obtaining a second orientation signal from a second digital compass in the mobile device and determining the orientation of the user based on both the first orientation signal and the second orientation signal. The method may further include inferring, based on the first and second orientation signals, whether the user is viewing the mobile device. Based on this inference, the mobile device may control its own functions such as, for example, the delivery or display of content.

Another aspect of the present technology is a tangible computer-readable medium upon which are stored instructions in code that are configured or programmed to perform the foregoing method(s) when the code stored in the computer-readable medium is loaded into memory and executed on a processor of a mobile device.

Another aspect of the present technology is a system for determining an orientation of a user of a mobile device. The system has a head-mounted accessory device including a first digital compass for providing a first orientation signal and a short-range wireless transmitter for transmitting the first orientation signal to the mobile device. The system also has a short-range wireless receiver in the mobile device for receiving the first orientation signal from the head-mounted accessory device and a processor operatively coupled to memory for determining the orientation of the user of the mobile device based on the first orientation signal.

In one implementation, the mobile device comprises a second digital compass for providing a second orientation signal to enable the processor to determine the orientation based on both the first orientation signal and the second orientation signal. The device may infer from the first and second orientation signals whether the user is viewing the mobile device, thereby providing a basis upon which device functions, such as for example the delivery and display of content, may be controlled.

The details and particulars of these aspects of the technology will now be described below, by way of example, with reference to the attached drawings.

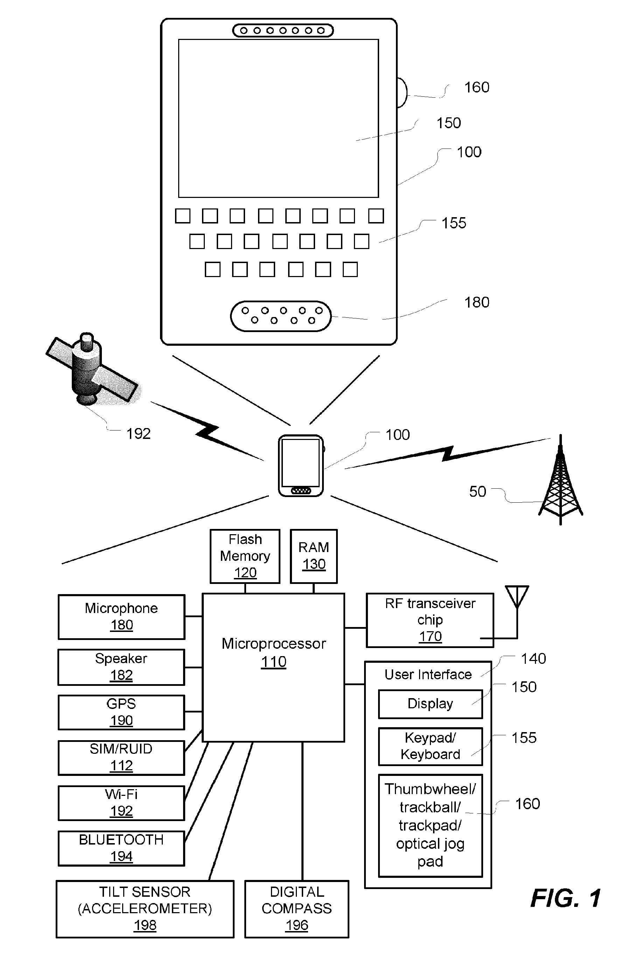

FIG. 1 is a schematic depiction of a mobile device, generally designated by reference numeral 100, on which the present technology can be implemented. It should be expressly understood that this figure is intentionally simplified to show only certain main components. The mobile device 100 may include other components beyond what is illustrated in FIG. 1.

As depicted in FIG. 1, the mobile device 100 includes a microprocessor 110 (or simply a "processor") which interacts with memory. The memory may include flash memory 120 and/or random access memory (RAM) 130. The mobile device includes one or more input/output devices or user interfaces 140, such as a display screen 150 (e.g. a small LCD screen or touch-sensitive display screen), and a keyboard or keypad 155. The user interface may also include a thumbwheel, trackball, trackpad or optical jog pad 160. The device may also include a USB port or serial port for connecting to peripheral equipment.

Where the mobile device 100 is a wireless communications device, the mobile device 100 further includes a radiofrequency (RF) transceiver 170 for communicating wirelessly with one or more base stations over a cellular wireless network using cellular communication protocols and standards for both voice call and packet data transfer such as GSM, CDMA, GPRS, EDGE, UMTS, LTE, etc. The mobile device may include a Subscriber Identity Module (SIM) card 112 for GSM-type devices or a Re-Usable Identification Module (RUIM) card for CDMA-type devices. The RF transceiver 170 may include separate voice and data channels.

For telephony, the mobile device 100 may include a microphone 180 and a speaker 182 (and optionally an earphone jack).

The mobile device 100 may also include a positioning system such as a Global Positioning System (GPS) receiver (chipset) 190 for receiving GPS radio signals transmitted from one or more orbiting GPS satellites 192. Although the present disclosure refers to expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

The mobile device 100 may optionally include a Wi-Fi™ transceiver 192, a Bluetooth® transceiver 194, a near-field communications (NFC) chip. The mobile device may also include a transceiver for WiMax™ (IEEE 802.16), a transceiver for ZigBee® (IEEE 802.15.4-2003 or other wireless personal area networks), an infrared transceiver or an ultra-wideband transceiver.

The mobile device 100 includes a digital compass 196. The digital compass may be a magnetometer. The digital compass provides an orientation signal indicative of the orientation of the device. The orientation may also be referred to, in some implementations, as the compass bearing or heading. The digital compass (or solid-state compass) may incorporate two or three magnetic field sensors (or magneto-inductive sensors) from which a microprocessor can compute the heading using trigonometry.

The mobile device 100 may also include a tilt sensor 198. The tilt sensor may be an accelerometer. The tilt sensor provides a tilt signal indicative of a tilt angle of the device.

In one variant, a tilt-sensitive digital compass may include both the magnetometer and the accelerometer (or other tilt sensor), i.e. both the magnetometer and the accelerometer may be integrated into a single chip or device. For example, an integrated magnetometer-accelerometer may include magneto-inductive sensors or magneto-resistive sensors with a 3-axis MEMS accelerometer in a single ASIC chip. Alternatively, the digital compass may incorporate a Hall-effect magnetic sensor. In other variants, the mobile device and/or the accessory device may include a gyroscope in addition to the magnetometer and accelerometer.

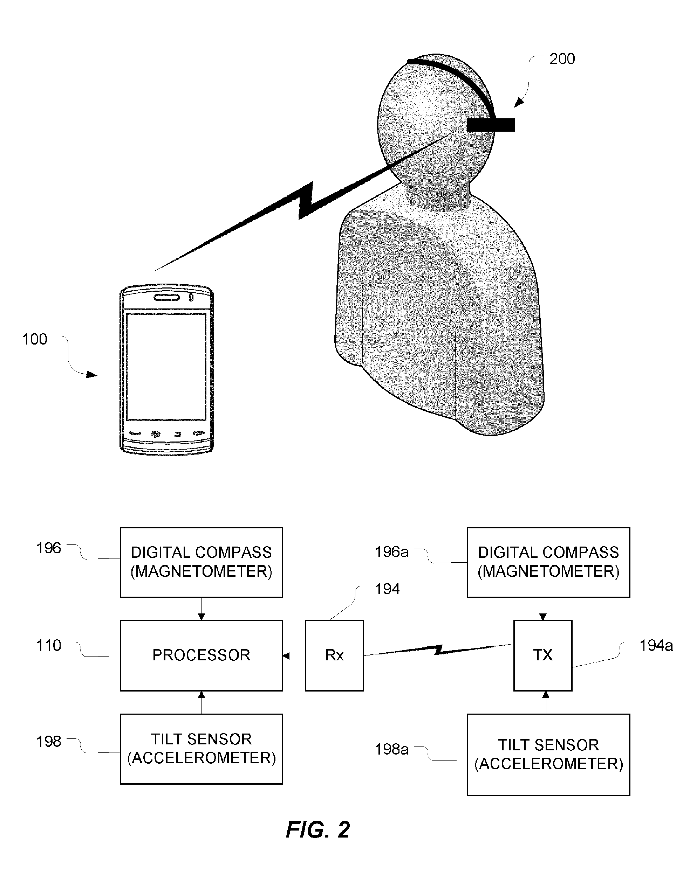

FIG. 2 depicts a system that includes a mobile device 100 and a head-mounted accessory device 200. In the implementation illustrated by way of example in this figure, the head-mounted accessory device 200 is a Bluetooth®-enabled headset or earpiece although other types of short-range wireless transceivers may be employed. As shown by way of example in this figure, the mobile device 100 includes a processor 110, a short-range receiver 194 (e.g. a Bluetooth® receiver), a digital compass 196, and a tilt sensor 198 (e.g. an accelerometer). The earpiece or other head-mounted accessory device includes, in this example, a short-range transmitter 194a (e.g. a Bluetooth® transmitter), a digital compass 196a (e.g. a magnetometer) and a tilt sensor (e.g. an accelerometer) 198a. This figure shows schematically how the relative orientation of the head-mounted accessory device and the mobile device (denoted by angle θ) may be used for various purposes as will be elaborated below.

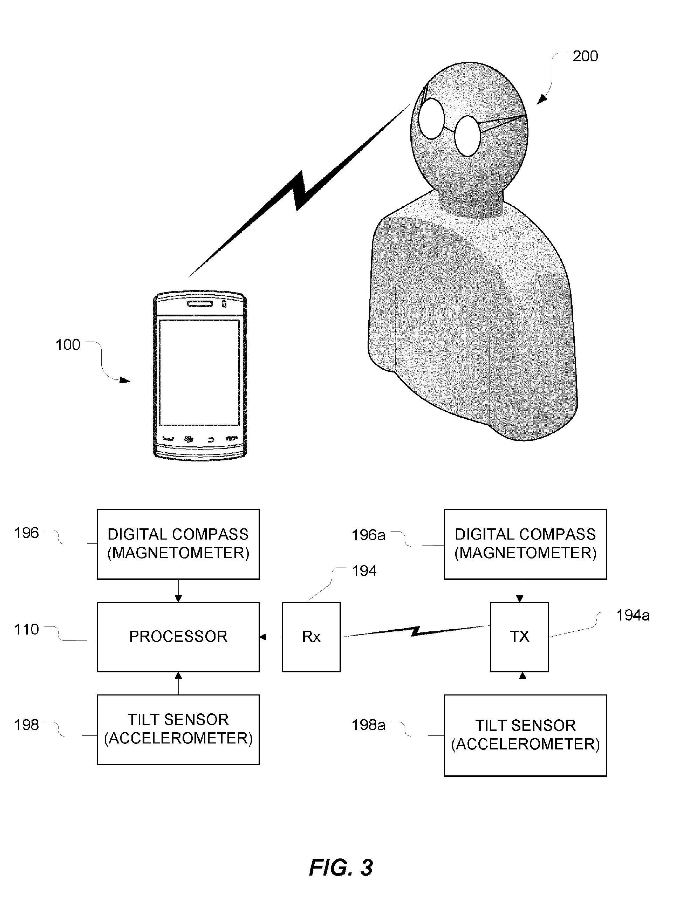

FIG. 3 (which is similar to FIG. 2) also depicts a system that includes a mobile device 100 and a head-mounted accessory device 200. In the example depicted in FIG. 3, the head-mounted accessory device 200 is Bluetooth®-enabled eyewear (e.g. glasses, goggles, or the like) although other types of short-range wireless transceivers may be employed. The eyewear includes, in this example, a digital compass 196a, a tilt sensor 198a and a Bluetooth® transmitter 194a. The accessory device may also include a power supply (e.g. rechargeable battery) and a processing unit (e.g., microprocessor with memory). This figure also shows schematically how the relative orientation of the head-mounted accessory device and the mobile device (denoted again by angle θ) may be used for various purposes as will be elaborated below.

For the purposes of this specification, the expression "short-range wireless" refers to any UHF or SHF wireless technologies, such as Bluetooth® that operates in the 2.4 GHz band, ZigBee® that operates in the ISM radio bands, i.e. 868 MHz in Europe, 915 MHz in the USA and Australia and 2.4 GHZ in other jurisdictions, Wi-Fi® that operates in the 2.4 GHz or 5 GHz bands, or Ultra Wide Band (UWB) that operates in the 3.1-10.6 GHz band.

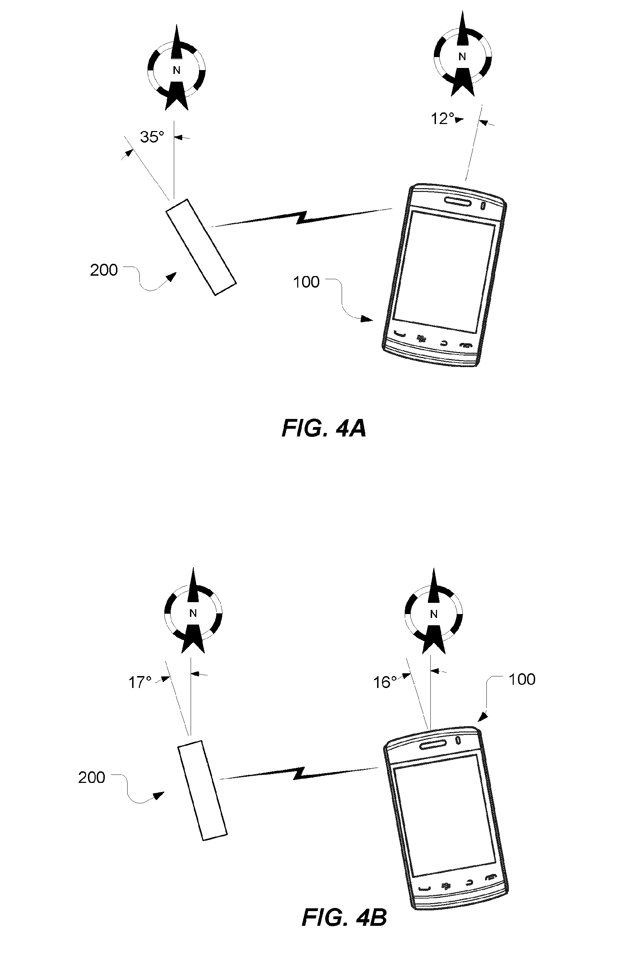

FIG. 4A and FIG. 4B illustrate schematically how the orientations of both the mobile device 100 and the head-mounted accessory device 200 are compared to determine whether the orientations match (i.e. align or correlate) within a predetermined (angular) tolerance. Generally speaking, tolerance is predetermined in the sense that it is established or settled upon, explicitly or implicitly, at some time prior to the determination as to whether the orientations match. If the orientations match, then the mobile device may infer whether or not the user wearing the head-mounted accessory device 200 is looking at the display of the mobile device 100. In this context, the mobile device "infers" in the sense that it determines (or acts upon) the likely state or chain of events according to the information that it has, even though that information may or may not directly establish that state or chain of events. To illustrate, the mobile device may control device functions based on an inference that the user is likely looking at the mobile device (or conversely based on an inference that the user is not likely looking at the mobile device), and this inference may be made whether the device can directly determine whether or not the user is actually looking at the mobile device. For example, the mobile device may deliver or display private or confidential content (e.g., e-mails, text messages, or decrypted documents) only when the mobile device 100 infers, from the orientation of the head-mounted accessory device 200, that the user wearing the head-mounted accessory device 200 is looking at the display of the mobile device. When the mobile device infers, from the orientation of the head-mounted accessory device 200, that the user is not looking at the display of the mobile device, the display screen of the mobile device may go blank to conceal and protect the private information.

In a variant, the mobile device may determine a probability that the user is looking at the display of the mobile device. Based on this probability, the device may variably control the display (or delivery) of content. Controlling the delivery of content, which may for example include displaying content or preventing content from being displayed or displaying a portion of content, may be called selectively displaying content. As previously indicated, content may include any kind of visual information and may include text, still or moving pictures or graphics. Content that is very sensitive (as determined by a user to be private, according to any standard) may be concealed even if there is a small probability that the user is not looking at the display of the mobile device. Content that is not so sensitive may be displayed onscreen unless there is a substantial probability that the user is not looking at the display. Thus, an inferred probability that the user is looking at the display enables the mobile device to modulate how the display of content is controlled.

In the example depicted in FIG. 4A, the head-mounted accessory device 200 is oriented 35 degrees to the left while the mobile device 100 is oriented 12 degrees to the right. In this example, the difference (delta) is thus 47 degrees. Assuming for example that the predetermined angular tolerance is 10 degrees, then the mobile device infers that the user wearing the head-mounted accessory device is not looking at the display of the mobile device.

In the example depicted in FIG. 4B, the head-mounted accessory device 200 is oriented 17 degrees to the left while the mobile device 100 is oriented 16 degrees to the left. In this example, the difference (delta) is 1 degree. Assuming that the predetermined tolerance is 10 degrees, the mobile device would infer that the user wearing the head-mounted accessory device is looking at the display of the mobile device.

The inference, as illustrated above, may be based on orientation (compass bearing or compass reading). This inference may be refined by also taking into account the tilt of the user's head and the tilt of the mobile device.

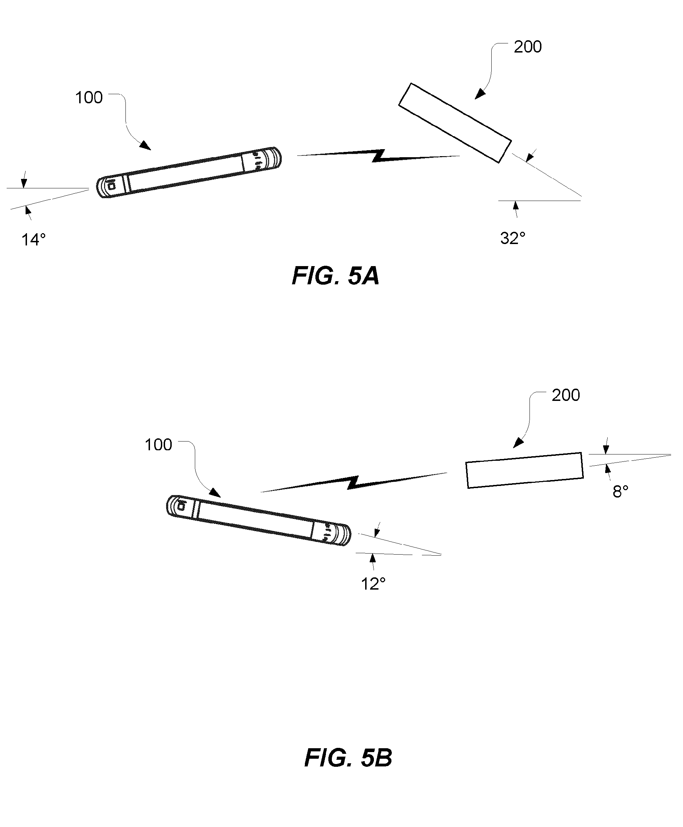

FIG. 5A and FIG. 5B illustrate schematically how the tilt angles of the head-mounted accessory device 200 and of the mobile device 100 can be used to refine the inference as to whether the user wearing the head-mounted accessory device 200 is looking at the display of the mobile device.

In the example depicted in FIG. 5A, the mobile device 100 is tilted downwardly at a tilt angle of 14 degrees (i.e. a declination of 14 degrees) while the head-mounted accessory device 200 is tilted upwardly at a tilt angle of 32 degrees (i.e. an inclination of 32 degrees). The difference (delta) in this example is 46 degrees. Assuming the predetermined tolerance is 25 degrees, then the mobile device would infer from the relative tilt angles that the user wearing the head-mounted accessory device 200 is not looking at the display of the mobile device 100.

In the example depicted in FIG. 5B, the mobile device 100 is tilted upwardly at a tilt angle of 12 degrees (i.e. an inclination of 12 degrees) where the head-mounted accessory device 200 is tilted downwardly at a tilt angle of 8 degrees (i.e. a declination of 8 degrees). In this example, the difference is 20 degrees. Assuming again that the predetermined tolerance is 25 degrees, then the mobile device would infer that the user wearing the head-mounted accessory device 200 is looking at the display of the mobile device 100.

In FIGS. 4A, 4B, 5A and 5B, the angles and thresholds are presented solely by way of example to illustrate the underlying concepts.

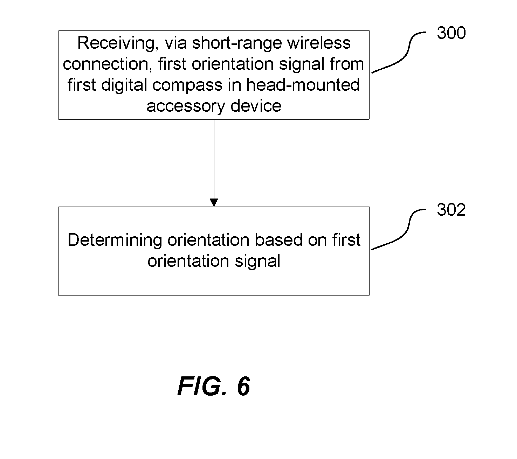

FIG. 6 is a flowchart depicting steps of a method for a mobile device to determine an orientation of a user of the mobile device. In general, the method includes (at step 300) receiving, over a short-range wireless connection between the mobile device and a head-mounted device, a first orientation signal from a first digital compass in the head-mounted accessory device and (at step 302) determining the orientation of the user wearing the head-mounted accessory device based on the first orientation signal transmitted from the head-mounted accessory device to the mobile device. Generally speaking, determining orientation of the user is a function of the accessory device and the orientation of that accessory device. In a typical implementation, determination of an orientation of a user may be thought of as determining an orientation of an accessory device worn by the user. In the case of a head-mounted accessory device, the orientation of a user may generally correspond to the orientation of the user's head or, in a typical implementation, which way the user is facing or looking.

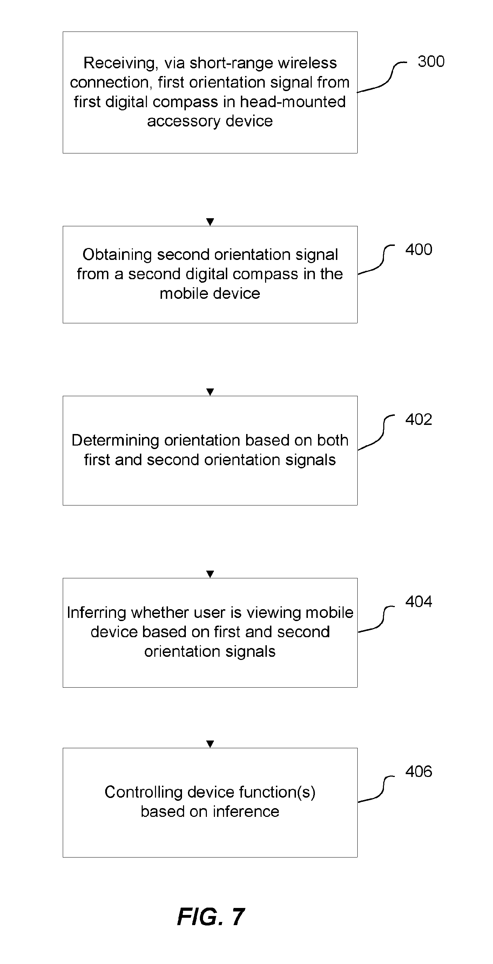

FIG. 7 is a flowchart depicting additional steps of a further (related) method of determining the orientations of both the mobile device and the head-mounted accessory from which an inference may be drawn as to whether the user is viewing the mobile device. In other words, the related method includes (at step 400) obtaining a second orientation signal from a second digital compass in the mobile device and (at step 402) determining the orientation of the user based on both the first orientation signal and the second orientation signal.

The method may further include (at step 404) inferring whether the user is looking at the display of the mobile device.

The method may further include (at step 406) controlling device function(s) based on the inference drawn in step 404. For example, the device function may be the displaying, delivery or provision of content onscreen. For example, in one implementation of the technology, the method includes determining content to deliver from the mobile device based on the orientation and then delivering the content based on the orientation. For example, the mobile device may shut off the display when the mobile device infers that the user wearing the head-mounted accessory device has looked away from the display of the mobile device. In this example, the mobile device only reactivates the display screen when the orientation of the user's head (as determined by the orientation signal received from the digital compass in the head-mounted accessory device) again matches that of the mobile device. In other words, in one implementation of the technology, the method includes determining an orientation of the mobile device by obtaining a second orientation signal from a second digital compass in the mobile device, inferring from the orientation of the mobile device and from the orientation of the user whether the user is viewing the mobile device, and selectively displaying content on the mobile device only when the orientation of the user matches within a predetermined tolerance the orientation of the mobile device.

The method may also take into account the relative tilt of the devices in addition to their relative orientations. In one implementation of the technology, the method includes determining a first tilt angle of the accessory device based on a first tilt sensor in the accessory device, determining a second tilt angle of the mobile device based on a second tilt sensor in the mobile device, and comparing the first and second tilt angles to infer whether the user is viewing the mobile device. The tilt sensor may be an accelerometer. The comparison of the first and second tilt angles may involve application of a threshold function or filter to provide an activation signal only when the difference between the first tilt angle and the second tilt angle is less than a predetermined angular threshold.

From the foregoing is should be apparent that a main advantage of this system is that it enables the mobile device to infer the orientation of the user's head and hence to infer whether or not the user is likely looking at the display of the mobile device.

Another advantage of a system having two spaced-apart devices each with its own digital compass is that this system provides increased directional accuracy. The problem of magnetic interference from nearby magnetic components can introduce errors in the digital compass readings. A corollary advantage of this two-compass system is that an anomaly in the data from one of the sensors can be detected more easily using the data from both sensors. An "anomaly" may be any situation in which the data make no sense for a conventional usage or are otherwise difficult to interpret or apply. An anomaly may occur with respect to a device or to an accessory or to both, or to one with respect to the other. One event in which there is a huge jump in the magnetic field read by one device, while the other remains fairly constant may be one example of an anomaly. Such an anomaly could indicate, for instance, that the device that experienced the jump was thrown into a purse where there are other magnetic objects. The device in the purse might then need to be recalibrated. One compass can be calibrated or recalibrated using the other compass. For example, in one implementation of the technology, recalibrating the second digital compass can be accomplished using the first digital compass. Furthermore, such calibration or recalibration of the magnetometer on the headset can be done while the user is wearing the headset (i.e., there is no need to remove the accessory device and make the conventional in-air figure eight calibration gesture that is conventionally required to calibrate the digital compass on a handset). All that would be required is for the user to turn his/her head around and/or perhaps walk around a little, and/or do a 360-degree body rotation.

Yet another advantage of this novel system is that the mobile device can obtain an orientation signal from a digital compass in the head-mounted accessory device, which enables the user to holster or stow the mobile device. This enables hands-free operation of orientation-based services delivered by the mobile device. In the case where the orientation of the holster with respect to the user's head is known, both digital compasses can still be used for providing greater directional accuracy. In other words, if the device is stowed in a holster that is attached to the user's belt on his/her right side - and if the user has previously indicated to the device that this is where it will be stowed when in its holster), the signals from both digital compass can be used. The operation of letting the device "know" where it is stowed when in its holster can be done from a configuration menu on the device.

In another embodiment, there are cases where it makes sense for the device to start relying entirely on the headset sensor instead of on its internal sensor. For instance, the way for the device to recognize that it was just holstered is through a combination of Hall-Effect sensor (in the device) and a magnet in the holster. As it turns out, the holster magnet tends to disturb the magnetic field around the device, which it turn, means that the data returned by the digital compass is no longer accurate.

The mobile device 100 can display any number of orientation-based services on the display screen in response to receipt of an orientation signal from the digital compass in the head-mounted accessory device. One simple example is a digital compass interface that can be programmed to guide the user to a given destination or to guide the user back a stored location or waypoint. The compass may also be displayed on a map for navigation. The compass may be used in a variety of other orientation-based services.

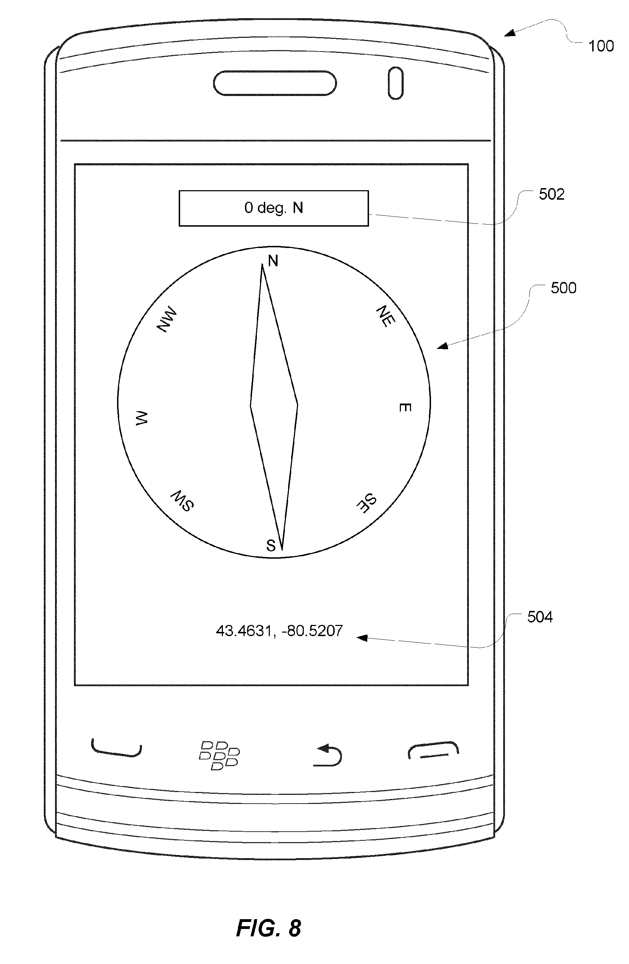

FIG. 8 is a depiction of a mobile device 100 displaying an example of a digital compass interface 500. The digital compass interface provides a graphical representation of a compass and may include, as shown, the cardinal directions of north (N), south (S), east (E), and west (W) and ordinal directions (north-east (NE), north-west (NW), south-west (SW), and south-east (SE). Degree numbers from 0 to 360 degrees may optionally also be presented. The digital compass interface may display a reading from only the first digital compass or a reading from only the second digital compass, or it may display an averaged reading from both the first and second digital compasses.

In one example implementation, the mobile device may detect whether the device is holstered, docked or otherwise stowed (placed in an operative state as opposed to an operative, handheld state). In that case, the mobile device may utilize only the compass signal from the digital compass in the head-mounted accessory device and ignore the signal from the digital compass in the mobile device. For example, only when the device detects that it is handheld will it utilize its own onboard digital compass. Alternatively, the signal from the holstered device may be used by predetermining (measuring) the orientation of the holster relative to the user's head.

In one example, the mobile device may provide direction-based content to the user of the mobile device while the mobile device is holstered or stowed away in a backpack or purse, for example. This enables a variety of location-based and direction-based services to be delivered by the mobile device without utilizing the digital compass in the mobile device.

For example, a user can receive content, e.g. travel-guide audio narration for buildings or landmarks that the user is facing based on the GPS position fix and the compass reading from the digital compass in the head-mounted accessory device. The user can receive this content without having to hold the mobile device in the direction of the building or landmark. The direction/orientation of the user is determined by the head-mounted accessory device and relayed over the short-range wireless connection to the mobile device where the direction/orientation is used to determine and deliver suitable direction-based content (or orientation-based content).

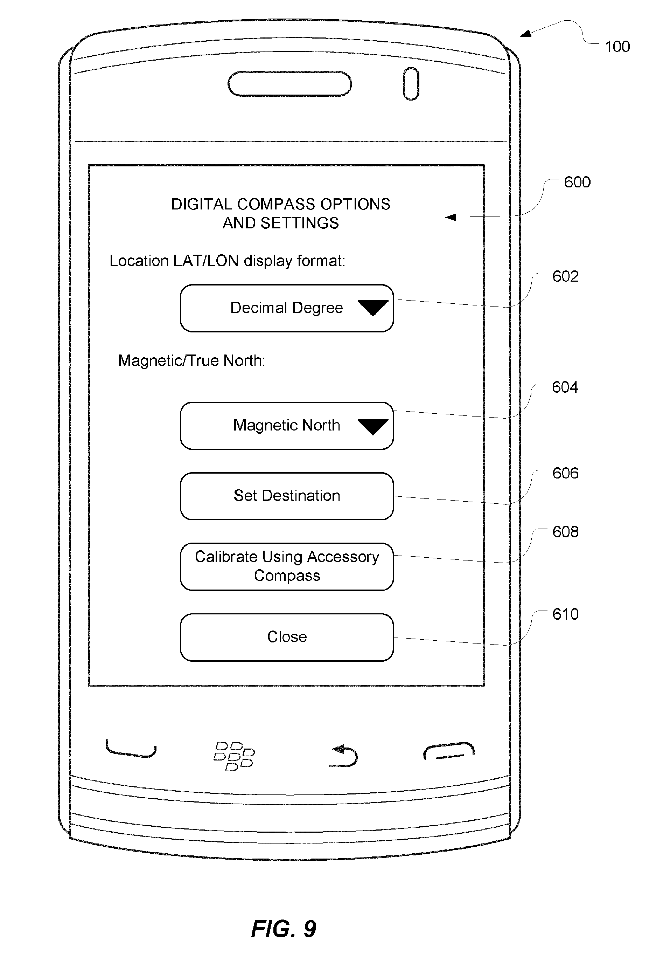

FIG. 9 is a depiction of a mobile device 100 displaying an options and settings page 600 for configuring options and settings for the digital compass. The options page 600 may include, for example, a first setting 602 to change the location LAT/LON display format (from decimal degree to other formats), a second setting 604 for configuring the mobile device to display either magnetic north or true north. User interface element 606 enables the user to set a destination so that the compass points the way to the destination. User interface element 608 enables the user to calibrate or recalibrate the digital compass in the mobile device using readings from the digital compass in the head-mounted accessory device. User interface element 610 enables the user to close the options page 600 and to return to the digital compass interface such as the one portrayed by way of example in FIG. 8. The particular options and settings, and their respective layout, are presented solely by way of example.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed or non-transitory or tangible computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) presented herein. The scope of the exclusive right sought by the Applicant(s) is therefore intended to be limited solely by the appended claims.

## Claims

1. A method for a mobile device to determine an orientation of a user of the mobile device, the method comprising:
receiving, over a short-range wireless connection between the mobile device and a head-mounted device, a first orientation signal from a first digital compass in the head-mounted accessory device; and
determining the orientation of the user based on the first orientation signal.

2. The method as claimed in claim 1 further comprising:
determining content to deliver from the mobile device based on the orientation; and
delivering the content based on the orientation.

3. The method as claimed in claim 1 further comprising:
obtaining a second orientation signal from a second digital compass in the mobile device; and
determining the orientation of the user based on both the first orientation signal and the second orientation signal.

4. The method as claimed in claim 3 comprising detecting an anomaly in the second orientation signal from the second digital compass and recalibrating the second digital compass using the first digital compass.

5. The method as claimed in claim 1 further comprising:
determining an orientation of the mobile device by obtaining a second orientation signal from a second digital compass in the mobile device;
inferring from the orientation of the mobile device and from the orientation of the user whether the user is viewing the mobile device; and
selectively displaying content on the mobile device only when the orientation of the user matches within a predetermined tolerance the orientation of the mobile device.

6. The method as claimed in claim 5 wherein the inferring comprises:
determining a first tilt angle of the accessory device based on a first tilt sensor in the accessory device;
determining a second tilt angle of the mobile device based on a second tilt sensor in the mobile device; and
comparing the first and second tilt angles to infer whether the user is viewing the mobile device.

7. A tangible computer-readable medium storing code which when loaded into memory and executed by a processor of a mobile device causes the mobile device to perform the steps of any one of claims 1 to 6.

8. A system for determining an orientation of a user of a mobile device, the system comprising:
a head-mounted accessory device including:
a first digital compass for providing a first orientation signal; and
a short-range wireless transmitter for transmitting the first orientation signal to the mobile device;
a short-range wireless receiver in the mobile device for receiving the first orientation signal from the head-mounted accessory device; and
a processor operatively coupled to memory for determining the orientation of the user of the mobile device based on the first orientation signal.

9. The system as claimed in claim 8 wherein the mobile device comprises a second digital compass for providing a second orientation signal, and wherein the processor determines the orientation based on both the first orientation signal and the second orientation signal.

10. The system as claimed in claim 9 wherein the processor infers whether the user is viewing the mobile device based on the first and second orientation signals and controls a display of the mobile device based on whether the user is viewing the mobile device.

11. The system as claimed in any one of claims 8 to 10 wherein the head-mounted accessory device is a Bluetooth® earpiece paired to a Bluetooth® transceiver in the mobile device.

12. The system as claimed in any one of claims 8 to 10 wherein the head-mounted accessory device is eyewear including a Bluetooth® transmitter paired to a Bluetooth® transceiver in the mobile device.

13. The system as claimed in claim 9 or claim 10 wherein the head-mounted accessory device comprises a first tilt sensor and wherein the mobile device comprises a second tilt sensor, the first and second tilt sensors providing first and second tilt signals to the processor of the mobile device to enable the processor to infer, using the first and second tilt signals and the first and second orientation signals, whether the user is viewing the mobile device.

14. The system as claimed in any one of claims 8 to 12 wherein the earpiece comprises a first tilt sensor and wherein the mobile device comprises a second tilt sensor.

15. The system as claimed in any one of claims 8 to 12 wherein the eyewear comprises a first tilt sensor and wherein the mobile device comprises a second tilt sensor.
